# EUROPEAN PATENT SPECIFICATION

(11) **EP 1 109 352 B1**
(45) Date of publication and mention of the grant of the patent: **29.10.2003**
(21) Application number: 99125304.8
(22) Date of filing: 17.12.1999
(51) Int. Cl.: H04L 12/18, H04Q 11/04

(54) **Method and device for controlling a telecommunication conference**
Verfahren und Vorrichtung zur Steuerung einer Fernmeldekonferenz
Méthode et dispositif pour commander une conférence téléphonique

(43) Date of publication of application: 20.06.2001
(73) Proprietor: TELEFONAKTIEBOLAGET L M ERICSSON (publ), 126 25 Stockholm (SE)
(72) Inventor: Sjöholm, Marie Susanne, 12647 Hägersten (SE); Baumann, Erich, 14140 Huddinge (SE); Villafrance, Angel Luis, 13662 Haninge (SE); Björk, Niklas, 13661 Haninge (SE); Morris, Mario, 11842 Stockholm (SE)
(74) Representative: HOFFMANN - EITLE

(56) References cited:
- WO-A-99/44149
- US-A- 5 999 525
- US-A- 6 029 195
- HORN D N: "A STANDARDS-BASED MULTIMEDIA CONFERENCING BRIDGE" AT & T TECHNICAL JOURNAL, vol. 72, no. 1, 1 January 1993 (1993-01-01), pages 41-49, XP000367734 NEW YORK, US ISSN: 8756-2324

## Description

The present invention relates to a method and device for controlling a telecommunication conference, preferably a multimedia conference.

A telecommunication conference is a conference of at least two participants via a telecommunication connection. One example of a telecommunication conference is, therefore, a conference call, i.e. a conference where a plurality of participants communicate via telephone, but are connected together such that any one participant may hear what any other participant says. Another example of a telecommunication conference is a multimedia conference, in which participants may not only listen to one another, but can also exchange video information and other types of data.

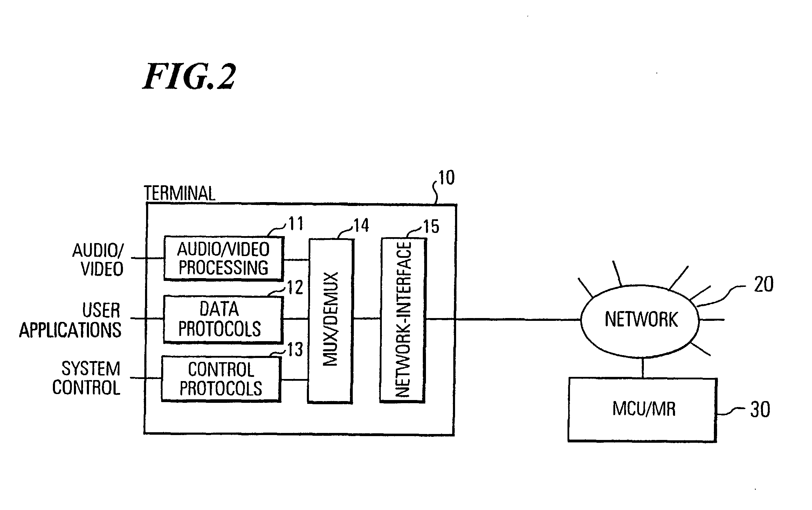

Fig. 2 shows a typical arrangement of a terminal and network arranged for multimedia conferences. The terminal 10 comprises an audio/video processing section 11 for processing audio/video information coming from a user, a data protocol section 12 that handles data coming from user applications, and a control protocol section 13 that handles system control information. Furthermore, a multiplexing/demultiplexing section 14 is provided, in which the data streams coming from sections 11, 12 and 13 are multiplexed or data streams for said sections are demultiplexed. Finally, a network/interface 15 is provided for connection to the network 20.

A multipoint control unit (MCU) or Multicast Router (MR) 30 is provided for coordinating and directing the flow of information between a plurality of conference participants who wish to simultaneously communicate with each other. Therefore, a system in accordance with Fig. 2 comprises a plurality of terminals, where each terminal is set at a user location and provides the necessary conferencing facilities to the user. The conference data generated by users is transported over the network, under the control of the MCU/MR.

It may be noted that the network 20 can be of any suitable type, where the term multipoint control unit MCU is usually used in connection with circuit-switched networks, and the term multipoint router MR is used in connection with packet-switched networks. As the present invention will not distinguish between the type of network used, the following description shall use the term MCU/MR in a generic sense as the basic control unit monitoring and arranging the flow of conference data through the given network. Also, it may be noted that the MCU/MR 30 is shown as a separate device in Fig. 2, which it preferably is, but the MCU/MR can also generally be embodied by corresponding functionalities arranged at a variety of locations, e.g. in one or more user terminals.

In recent years telecommunication conferences, and especially multimedia conferences have become more frequent, which is due to the wider availability of corresponding equipment, such as computers with video capabilities, and corresponding networks for transporting the data, e.g. ISDN networks or the Internet. Due to the increasing use of such conferences, the control or management of conferences becomes ever more complicated, as a multitude of different requirements and requests have to be taken into account, due to the fact that different conferences will be arranged for widely differing purposes.

The conventional solution is to adapt the control procedure in the MCU/MR in such a way that it can handle all kinds of different requirements, i.e. can deal with very different kinds of discussions or conferences. This, however, has the disadvantage that the control routines become very complicated as they must fulfill widely varying requirements. This also makes the setting up or scheduling of conferences complicated, because the user arranging the conference must specify a large amount of information, some of which may be not be necessary or useful in connection with the purpose of his conference. On the other hand, if the control routines are not provided with more detailed services, then specific requirements or purposes cannot be fulfilled, such that the conference system only has a limited performance, which makes it less useful and ultimately makes it unattractive for the user, due to its lack of flexibility.

The article "A standards-based multimedia conferencing bridge" by David Horn et al, AT&T Technical Journal vol. 72(1993) Jan./Feb., no. 1, pages 41-49, XP000367734 New York, US ISSN 8756-2324 generally describes point-to-point conference control according to H.230 and H.242. No details are given of how any control procedures are arranged.

The article "Das komplette Leistungsumfeld von ISDN" by K. Käser, Funkschau, Franzis-Verlag K.G. München, vol. 67, no. 11, May 12, 1995, pages 24-30, XP000517146 ISSN:0016-2841 describes performance features of ISDN telephones. Among other things, the article mentions that communication can be restricted to a fixed group of members, thereby to obtain a "private network" that can not be accessed by outsiders.

The object of the present invention is to provide a method and a device for controlling a telecommunication conference, which provides a great amount of flexibility without the need for complicated control routines.

This object is solved by the method of claim 1 and the device of claim 8. Advantageous embodiments are described in the dependent claims.

In accordance with the present invention, the control of a telecommunication conference comprises a classifying step for classifying a conference into one of a number of different categories, where each category is associated with its own specific control routine that is different from the other control routines associated with other categories. In this way, specific conference types can be envisioned, which relate to different requirements, such that each individual set of control routines is specifically designed for the given category. This makes the system simpler, and can lead to a modular control implementation scheme in the MCU/MR, namely where a given category can be added or deleted without complicated re-arrangements.

The various advantages of the present invention shall become clearer when studying the following description of detailed embodiments, where said description makes reference to the figures, in which:
- Fig. 1: is a schematic chart of the principle of the present invention, and
- Fig. 2: is a block diagram showing the arrangement of a terminal, a network and an MCU/MR.

In the following, the present invention shall be described on the basis of multimedia conferencing, as it is known in connection with a number of standards specified by the International Telecommunications Union-Telecommunications Standardization Sector (ITU-T), namely the so-called H.32X series. Among said series are such standards as H.320 (for ISDN), H.323 (for Internet protocol based networks) or H.324 (for PSTN networks). These standards again refer to standards contained therein (i.e. the H.320 standard uses H.261 as a video coding standard). However, it should be understood that the present invention is by no means restricted to these standards, but can be applied to any system of telecommunication conferencing, be it multimedia conferencing or regular call conferencing. Due to this, the following description shall not give specific examples relating to specific standards or protocols, as the present invention is not concerned with such specific standards or protocols.

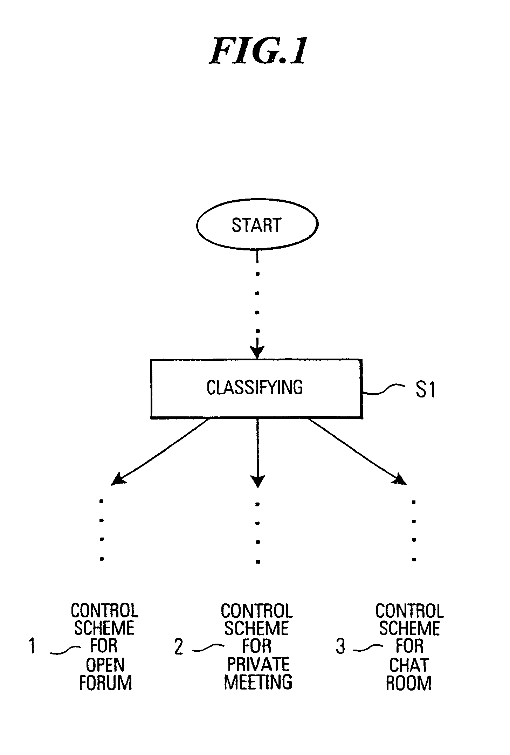

Fig. 1 shows a schematic chart of the principle of the present invention. As can be seen, the control process for controlling a conference e.g. in a system as shown in Fig. 2, comprises a step S1 for classifying the conference into one of at least two categories. Fig. 1 shows three categories, namely an open forum (OF) 1, a private meeting (PM) 2 or a chat room (CR) 3. These different categories shall be explained in more detail further on.

The step of classification S1 can be done in any suitable or desirable way. Typically, the classification step S1 shall be performed when a conference is being set-up or scheduled, namely on the basis of information provided by the user or entity setting-up/scheduling the conference. For example, as is known from the above-mentioned standards, the setting-up/scheduling of a conference requires that a network user (not necessarily a participant of the conference) provides a request and some initial information to the MCU/MR 30, such as start-time, end-time, list of participants, etc. The classifying step S1 will be performed on the basis of such initial information. Preferably, this is done by having the user who is setting up or scheduling a conference give an explicit indication of the conference type (the classification). Then the step of classifying simply consists in choosing the specified conference category associated with the conference being set up or scheduled. In other words, with respect to the example in Fig. 1, if the user requests an open forum conference 1, then the classifying step S1 chooses this category, such that the control scheme or control routines for an open forum conference are performed for this conference being set up or scheduled.

Alternatively, it is also possible that the classification step S1 is done without explicit information from the user setting up the conference, namely on the basis of classification algorithms that perform an analysis of the initial information sent by the user, and choose a conference type on the basis thereof. A simple example of this could be that, if the initial information does not contain a list of participants, then the classification step judges this as an indication that no private meeting is being requested, and accordingly chooses the open forum category or chat room category, where the choice between the open forum and chat room is then based on further data in the initial information. Such further information could e.g. be the determination if the initial information contains a request for designating one participant as chairperson or not, namely, if a chairperson is designated, then the open forum category is chosen, and if no chairperson is designated, then the chat room category is chosen.

Now the three categories shown in Fig. 1 shall be explained in somewhat more detail. The following table 1 gives an overview of the different functions provided by each of the categories.

**Table 1:**

| **Function:** | **Open Forum** | **Private Meeting** | **Chat Room** |
|---|---|---|---|
| | | | |
| Chair Person | Optional | Optional | No |
| User scheduling | Yes | Yes | No |
| Administrator scheduling | Yes | Yes | Yes |
| User Join | Yes | Yes | Yes |
| Administrator Join | Yes | Yes | Yes |
| User Invite | Yes | Yes | Yes |
| Administrator Invite | Yes | Yes | Yes |
| Information Visibility | Open to all | Limited | Open to all |

The first type of conference, namely Open Forum, is a public, controlled conference. "Public" means that anyone can participate (i.e. anyone having the required multimedia capabilities and network access), and "controlled" means that a chairperson may be specified, who will lead the conference. "Leading the conference" means that the chairperson is a participant who can invoke specific conference control functions that are not available to ordinary participants, such as determining who can be seen by the other participants (in case video-switching is used). Other control functions reserved for the chairperson are the possibility of suspending a specific participant, which means that this specific participant is forced to exit the conference, or the chairperson may close the conference.

The predetermined control privileges accorded to the chairperson will typically be implemented with the help of a specific protocol session established between the chairperson's terminal and the MCU/MR. As already mentioned previously, the chairperson can be designated in the classifying step at the beginning of a conference. However, it is equally well possible that the chairperson is chosen during a conference that starts without a chairperson. For example, a chair person can be "elected" by all of the momentary participants. The control scheme 1 (see Fig. 1) is arranged such that then the above-mentioned chairperson's control privileges will be accorded to the chosen participant by the MCU/MR.

It is also important to point out that the chairperson should not be confused with the administrator. The administrator is the entity that is responsible for the maintenance of the network and the basic provision of the conferencing service via the MCU/MR. The chairperson is a terminal user who has enhanced conference control privileges with respect to other terminal users in a given conference.

As can be seen from table 1, the open forum category also comprises user scheduling (which means that the person setting up or scheduling the conference can determine the begin and end of the conference), administrator scheduling (which means that the administrator can determine the begin and end of the conference), user join (which means that a user who is not yet participating can dial into or log into a conference that is currently underway), administrator join (which means that the administrator can enter into a conference that is underway), user invite (which means that a participant of the conference can invite a terminal user who is not yet participating), administrator invite (which means that a participant of the conference can invite the administrator to enter the conference).

Due to the fact that the open forum is public, the relevant information associated with the conference and the participants is open to all, which means that any user of the network (not only participants) can view the relevant information. Such available information can be one or more of: the start time, the stop time, ongoing conferences of the given category, users currently participating in such a conference, the location of each user (geographically or logically), connection types (such as the type of media the user has, e.g. a specific audio or video connection), the topic of the conference (entered by the user who started/scheduled the conference), who the chairperson is (if a chairperson is appointed), etc.

The second category in table 1 is that of a private meeting. A private meeting is a private, controlled conference. "Private" means that the participants are limited to a restricted group, e.g. to those users specified in a given list. Such a list can either be established as a part of the above-described initial information, namely by the person setting up or scheduling the conference, or it is possible that this list is modified during the conference itself. In any case, there is no open access as in the case of open forum, because only users mentioned in the list may participate. As an alternative the access can be restricted by a password, i.e. it is necessary to give a password before being able to enter the private meeting. Such a password is specified at the start or scheduling of the corresponding conference.

In accordance with this restricted access to the conference of the private meeting type, the information visibility is also limited, namely only users specified in the above-mentioned list of participants may view the relevant information. In this connection, it may be noted that thereby it is possible for a user specified in the list, but who is not yet participating in the conference, to view the relevant information. The function of user join is also appropriately modified with respect to the open forum category, namely that only users contained in the list may join a conference that is underway. The function of user invite is designed such that any conference participant may invite another user, where said other user must not be mentioned in the list. However, if said other user joins the conference in response to the invitation, then he will be included in the list of users that are allowed for this private meeting. Regarding the possibility of having a chairperson, it is sufficient to refer to the description above in connection with the open forum category, as the chair person function in the private meeting category is identical.

In the event of the above mentioned alternative embodiment using a password instead of a list, information visibility will be such that the relevant information will only be visible to those that enter the password or possibly a second password specifically associated with this information.

The third category shown in table 1 is that of a chat room, where a chat room is a public, uncontrolled conference. "Public", again, means that the conference is open to all users of the network and that all users have full information visibility, and "uncontrolled" means that there is no provision of a chairperson. As can be seen in table 1, there is also no user scheduling in the chat room category. A chat room conference is started and closed by the administrator, and it is possible that a chat conference has zero members.

As can be seen from the above-described features of the individual categories, the associated control procedures for each category will be quite different. For example, a category employing a chairperson requires specific procedures for letting said chairperson perform his control duties, whereas the chat room category will have to have specific control procedures that allow each participant to choose the video information that he would like to view (i.e. which specific other user he would like to see), or some other form of control must be implemented, e.g. one where the administrator receives priority control.

As becomes evident from the above examples for categories, each category will be associated with specific control procedures that can be quite different from one another. In other words, these control routines are specifically adapted for the associated category. Thereby it is not necessary to have one cumbersome control routine that takes into account every possibility of every kind of possible conference, and additionally a high flexibility is achieved for the implementation of the control routines in the MCU/MR, because categories can be added or deleted modularly, which essentially only requires an updating of the classification step.

Another advantage is that the setting up of a conference is greatly simplified if the user setting up the conference can specify a certain category, and will then only have to provide the necessary initial information related to that category. For example, if the open forum category is chosen, the user will not be asked to enter a list of participants.

Although the above embodiment has been described in connection with three specific categories, namely open forum, private meeting and chat room, it is understandable that the present invention is by no means restricted thereto. For one thing, it is possible to only provide two of the three categories, or on the other hand to provide several more categories. Also, it is possible to provide other kinds of categories, e.g. categories that are distinguished with respect to the number of participants (i.e. small group categories and large group categories).

Another advantage afforded by the above described classification of conferences into different categories is the more efficient use of the resources in the MCU/MR and the network. This is due to the fact that the amount of processor load, memory and data throughput are different for the different categories. For example, the probability that all users scheduled for a Private Meeting will attend is much higher than in the event of an Open Forum. On the other hand, an Open Forum will typically attract more participants than a Private Meeting. For a Chat Room, the amount of necessary resources varies over time. This has important consequences for resource planning. By performing the classification into different conference types, it is possible to make more efficient use of the MCU/MR resources.

The above-described specific embodiments serve to provide the skilled person with a better understanding of the invention, and are not intended to restrict the scope. The scope of the invention is much rather defined by the appended claims, and reference numerals therein only serve the purpose of better understanding.

## Claims

1. Method of controlling a telecommunication conference between a plurality of terminal devices, **characterised in that** it comprises the step of classifying (S1) a conference to be controlled into one of at least two different categories (OF, PM, CR), where control routines (1, 2, 3) associated with a given category are different from those associated with a different category.

2. Method according to claim 1, wherein said control routines (1, 2, 3) comprise routines for one or more of the establishment, maintenance, termination, security management and access management of a conference.

3. Method according to claim 1 or 2, wherein said conferences are multimedia conferences.

4. Method according to claim 3, wherein said multimedia conferences comprise the exchange of audio information, video information and data information.

5. Method according to one of claims 1 to 4, wherein one of said categories (OF, CR) is associated with a type of conference in which access is unrestricted.

6. Method according to one of claims 1 to 4, wherein one of said categories (PM) is associated with a type of conference in which access is restricted to a predetermined group.

7. Method according to one of claims 1 to 6, wherein one or more of said categories (OF, PM) is associated with a type of conference in which one of the conference participants is designated as chairperson, where said chairperson can invoke conference control functions that the other conference participants can not invoke.

8. Device (MCU/MR) for controlling a telecommunication conference between a plurality of terminal devices, **characterised in that** it comprises a means for classifying a conference to be controlled into one of at least two different categories (OF, PM, CR), where control routines (1, 2, 3) associated with a given category are different from those associated with a different category.

9. Device (MCU/MR) according to claim 8, wherein said control routines (1, 2, 3) comprise routines for one or more of the establishment, maintenance, termination, security management and access management of a conference.

10. Device (MCU/MR) according to claim 8 or 9, wherein said conferences are multimedia conferences.

11. Device (MCU/MR) according to claim 10, wherein said multimedia conferences comprise the exchange of audio information, video information and data information.

12. Device (MCU/MR) according to one of claims 8 to 11, wherein one of said categories (OF, CR) is associated with a type of conference in which access is unrestricted.

13. Device (MCU/MR) according to one of claims 8 to 11, wherein one of said categories (PM) is associated with a type of conference in which access is restricted to a predetermined group.

14. Device (MCU/MR) according to one of claims 8 to 13, wherein one or more of said categories (OF, PM) is associated with a type of conference in which one of the conference participants is designated as chairperson, where said chairperson can invoke conference control functions that the other conference participants can not invoke.

## Patentansprüche

1. Verfahren zum Steuern einer Telekommunikationskonferenz zwischen einer Vielzahl von Endgerätevorrichtungen, **dadurch gekennzeichnet, dass** es die folgenden Schritte aufweist: Klassifizieren (S1) einer zu steuernden Konferenz in eine von wenigstens zwei unterschiedliche Kategorien (OF, PM, CR), wobei Steuerroutinen (1, 2, 3), die zu einer gegebenen Kategorie gehören, von denjenigen unterschiedlich sind, die zu einer anderen Kategorie gehören.

2. Verfahren nach Anspruch 1, wobei die Steuerroutinen (1, 2, 3) Routinen für eines oder mehreres von dem Aufbau-, Wartungs-, Abschluss-, Sicherheitsmanagement und einem Zugriffsmanagement einer Konferenz aufweisen.

3. Verfahren nach Anspruch 1 oder 2, wobei die Konferenzen Multimediakonferenzen sind.

4. Verfahren nach Anspruch 3, wobei die Multimediakonferenzen den Austausch von Audioinformation, Videoinformation und Dateninformation aufweisen.

5. Verfahren nach einem der Ansprüche 1 bis 4, wobei eine der Kategorien (OF, CR) einem Typ von Konferenz zugeordnet ist, bei welchem ein Zugriff unbeschränkt ist.

6. Verfahren nach einem der Ansprüche 1 bis 4, wobei eine der Kategorien (PM) einem Typ von Konferenz zugeordnet ist, bei welchem ein Zugriff auf eine vorbestimmte Gruppe beschränkt ist.

7. Verfahren nach einem der Ansprüche 1 bis 6, wobei eine oder mehrere der Kategorien (OF, PM) einem Typ von Konferenz zugeordnet ist, bei welchem einer der Konferenzteilnehmer als Vorsitzender bestimmt ist, wobei der Vorsitzende Konferenz-Steuerfunktionen aufrufen kann, die die anderen Konferenzteilnehmer nicht aufrufen können.

8. Vorrichtung (MCU/MR) zum Steuern einer Telekommunikationskonferenz zwischen einer Vielzahl von Endgerätevorrichtungen, **dadurch gekennzeichnet, dass** sie folgendes aufweist: eine Einrichtung zum Klassifizieren einer zu steuernden Konferenz in eine von wenigstens zwei unterschiedlichen Kategorien (OF, PM, CR), wobei Steuerroutinen (1, 2, 3), die zu einer gegebenen Kategorie gehören, unterschiedlich von denjenigen sind, die zu einer anderen Kategorie gehören.

9. Vorrichtung (MCU/MR) nach Anspruch 8, wobei die Steuerroutinen (1, 2, 3) Routinen für eines oder mehreres von dem Aufbau-, Wartungs-, Abschluss-, Sicherheitsmanagement und einem Zugriffsmanagement einer Konferenz aufweisen.

10. Vorrichtung (MCU/MR) nach Anspruch 8 oder 9, wobei die Konferenzen Multimediakonferenzen sind.

11. Vorrichtung (MCU/MR) nach Anspruch 10, wobei die Multimediakonferenzen den Austausch von Audioinformation, Videoinformation und Dateninformation aufweisen.

12. Vorrichtung (MCU/MR) nach einem der Ansprüche 8 bis 11, wobei eine der Kategorien (OF, CR) einem Typ von Konferenz zugeordnet ist, bei welchem ein Zugriff unbeschränkt ist.

13. Vorrichtung (MCU/MR) nach einem der Ansprüche 8 bis 11, wobei eine der Kategorien (PM) einem Typ von Konferenz zugeordnet ist, bei welchem ein Zugriff auf eine vorbestimmte Gruppe beschränkt ist.

14. Vorrichtung (MCU/MR) nach einem der Ansprüche 8 bis 13, wobei eine oder mehrere der Kategorien (OF, PM) einem Typ von Konferenz zugeordnet ist, bei welchem einer der Konferenzteilnehmer als Vorsitzender bestimmt ist, wobei der Vorsitzende Konferenz-Steuerfunktionen aufrufen kann, die die anderen Konferenzteilnehmer nicht aufrufen können.

## Revendications

1. Procédé de contrôle d'une conférence de télécommunications entre une pluralité de dispositifs terminaux, **caractérisé en ce qu'**il comprend l'étape de classification (S1) d'une conférence devant être contrôlée dans l'une d'au moins deux catégories différentes (OF, PM, CR), où les programmes de contrôle (1, 2, 3) associés à une catégorie donnée sont différents de ceux associés à une catégorie différente.

2. Procédé selon la revendication 1, dans lequel lesdits programmes de contrôle (1, 2, 3) comprennent des programmes pour un ou plus des items suivants : établissement, maintien, terminaison, gestion de la sécurité et gestion des accès d'une conférence.

3. Procédé selon les revendications 1 ou 2, dans lequel lesdites conférences sont des conférences multimédia.

4. Procédé selon la revendication 3, dans lequel lesdites conférences multimédia comprennent l'échange d'informations audio, d'informations vidéo, et d'informations de données.

5. Procédé selon l'une quelconque des revendications 1 à 4, dans lequel une desdites catégories (OF, CR) est associée à un type de conférence auquel l'accès n'est pas restreint.

6. Procédé selon l'une quelconque des revendications 1 à 4, dans lequel une desdites catégories (PM) est associée à un type de conférence auquel l'accès est restreint à un groupe prédéterminé.

7. Procédé selon l'une quelconque des revendications 1 à 6, dans lequel une ou plusieurs desdites catégories (OF, PM) est associée à un type de conférence dans lequel un des participants à la conférence est désigné comme président, ledit président ayant la possibilité de faire appel à des fonctions de contrôle de conférence auxquelles les autres participants à la conférence ne peuvent pas faire appel.

8. Dispositif (MCU/MR) pour contrôler une conférence de télécommunications entre une pluralité de dispositifs terminaux, **caractérisé en ce qu'**il comprend un moyen pour classer une conférence devant être contrôlée dans une d'au moins deux catégories différentes (OF, PM, CR), où les programmes de contrôle (1, 2, 3) associés à une catégorie donnée sont différents de ceux associés une catégorie différente.

9. Dispositif (MCU/MR) selon la revendication 8, dans lequel lesdits programmes de contrôle (1, 2, 3) comprennent des programmes pour l'un ou plusieurs items suivants : établissement, maintien, terminaison, gestion de la sécurité et gestion des accès d'une conférence.

10. Dispositif (MCU/MR) selon l'une quelconque des revendications 8 ou 9, dans lequel lesdites conférences sont des conférences multimédia.

11. Dispositif (MCU/MR) selon la revendication 10, dans lequel lesdites conférences multimédia comprennent l'échange d'informations audio, d'informations vidéo, et d'informations de données.

12. Dispositif (MCU/MR) selon l'une quelconque des revendications 8 à 11, dans lequel l'une desdites catégories (OF, CR) est associée à un type de conférence dont l'accès n'est pas restreint.

13. Dispositif (MCU/MR) selon l'une quelconque des revendications 8 à 11, dans lequel une desdites catégories (PM) est associée à un type de conférence dont l'accès est restreint à un groupe prédéterminé.

14. Dispositif (MCU/MR) selon l'une quelconque des revendications 8 à 13, dans lequel une ou plusieurs desdites catégories (OF, PM) est associée à un type de conférence dans lequel un des participants à la conférence est désigné comme président, ledit président ayant la possibilité de faire appel à des fonctions de contrôle de conférence auxquelles les autres participants à la conférence ne peuvent pas faire appel.
